# EUROPEAN PATENT APPLICATION

(11) **EP 3 267 613 A1**
(43) Date of publication of application: **10.01.2018**
(21) Application number: 16758457.2
(22) Date of filing: 29.02.2016
(51) Int. Cl.: H04L 5/00

(54) **DATA TRANSMISSION METHOD, FEEDBACK INFORMATION TRANSMISSION METHOD, AND RELATED DEVICE**

(30) Priority: 03.03.2015 CN 201510095559
(71) Applicant: China Academy of Telecommunications Technology, Hai Dian District Beijing 100191 (CN)
(72) Inventor: LIN, Yanan, Beijing 100191 (CN); SHEN, Zukang, Beijing 100191 (CN); PAN, Xueming, Beijing 100191 (CN); WANG, Jiaqing, Beijing 100191 (CN); XU, Weijie, Beijing 100191 (CN)
(74) Representative: Nony
(86) International application number: PCT/CN2016/074800
(87) International publication number: WO 2016/138841

(57) **Abstract**

Disclosed in the present invention are a data transmission method, a feedback information transmission method, and a related device, used for providing a solution for transmitting data on an unlicensed frequency band in an LTE system. The method comprises: a terminal device, on the basis of a signal/information sent by a network device, determines a starting time of a system wireless sub-frame; the terminal device, on the basis of a system wireless sub-frame n+1 starting time, receives downlink control information, wherein n is the serial number of the system wireless sub-frame; the terminal device, on the basis of the downlink control information, determines in the system wireless sub-frame n the starting time of a service sub-frame m, wherein m is the serial number of the service sub-frame, the starting time of the service sub-frame m being different to the starting time of the system wireless sub-frame n, and the length of the service sub-frame being different to the length of the system wireless sub-frame; and the terminal device receives service data during the service sub-frame m.

## Description

This application claims the benefit of Chinese Patent Application No. 201510095559.1, filed with the Chinese Patent Office on March 3, 2015 and entitled "A method and device for transmitting data, and a method and device for transmitting feedback information", which is hereby incorporated by reference in its entirety.

### Field

The present application relates to the field of communications, and particularly to a method and device for transmitting data, and a method and device for transmitting feedback information.

### Background

As there is a constantly growing amount of mobile data traffic, frequency band resources are increasingly insufficient, and the demand for the amount of traffic may have failed to be satisfied by deploying a network, and transmitting the traffic, only over resources in licensed frequency bands, so the mobile data traffic may be transmitted over resources in unlicensed frequency bands to thereby improve the utilization ratio of the resources in the frequency bands, and the experience of a user. Mobile data traffic is transmitted over a secondary carrier in an unlicensed frequency band with the assistance of a primary carrier in a licensed frequency band.

An unlicensed frequency band may be shared by various wireless communication systems, e.g., Bluetooth, Wi-Fi, etc., where the various wireless communication systems access a resource in the shared unlicensed frequency band by contending for the resource. Accordingly the coexistence between Unlicensed Long Term Evolution (simply U-LTE or LTE-U) systems deployed by different operators, and between an LTE-U system and a Wi-Fi or another wireless communication system has been studied as a focus.

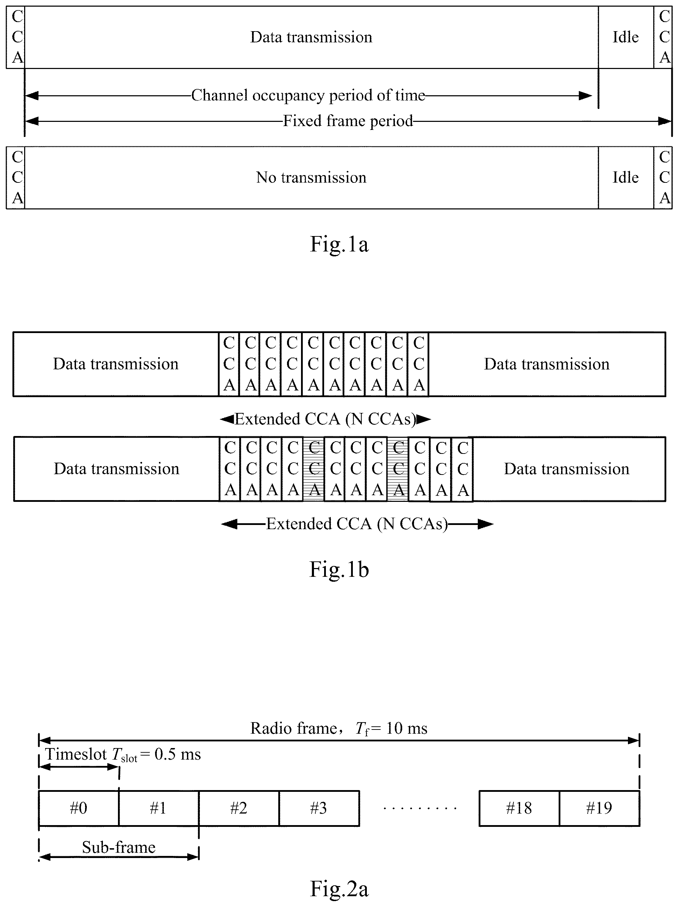

In order to provide a flexible, fair, and adaptive channel access mechanism, it is required in the European Telecommunications Standard Institute (ETSI) standard that the Listen Before Talk (LBT) technology shall operate in the unlicensed frequency bands of 5150-5350MHz and 5470-5725MHz. In an LBT process similar to the WiFi Carrier Sense Multiple Access with Collision Avoidance (CSMA/CA) mechanism, each equipment needs to perform Clear Channel Assessment (CCA) before accessing a channel. Equipments in an unlicensed frequency band are categorized in the ETSI standard into Frame Based Equipment (FBE) and Load Based Equipment (LBE), which correspond respectively to two different access mechanisms as illustrated in Fig.1a and Fig.1b.

In the FEB channel access mechanism, a channel is occupied for a fixed period of time of at least 1ms and at most 10ms. An idle period is at least 5% of the channel occupancy period of time. The equipment performs new CCA detection for another access to the channel in a CCA period of time following the idle period. In the FEB channel access mechanism, the channel occupancy period of time, and the idle period are combined into a fixed value referred to as a frame period.

In the LBE channel access mechanism, both a channel transmission period of time and a transmission start point are varying. Before a channel is accessed, extended CCA detection is performed, that is, a random factor N is generated, until the channel has been clear for N times a CCA period of time, and then the channel is accessed, and data transmission is initiated, where the channel is occupied for the longest period of time which is 13ms.

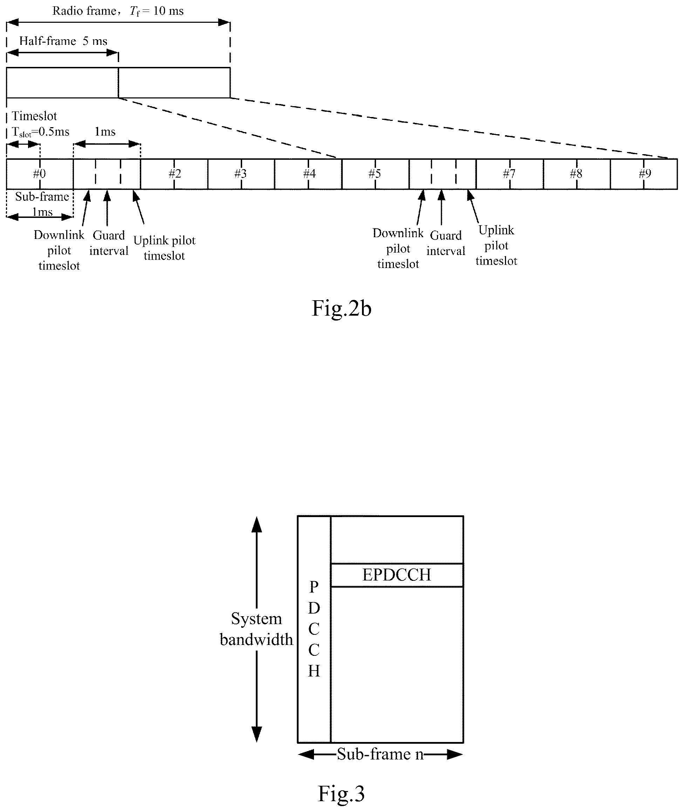

The Frequency Division Duplex (FDD) mode and the Time Division Duplex (TDD) mode are supported in the LTE system, where different frame structures are applicable to these two modes. The two frame structures are common in that each radio frame includes 10 sub-frames of 1ms. Fig.2a illustrates an FDD system operating with a first frame structure, and Fig.2b illustrates a TDD system operating with a second frame structure.

As can be apparent from the LTE frame structures, a signal is transmitted in each 1ms sub-frame. As currently required in the 3GPP, an LTE system and an LTE-U system in a licensed frequency band need to be aligned in time. For the LTE-U system, the start point of time when LTE-U signal transmission is started may be any position in some sub-frame due to the LBT contention based access, a period of time for preparing a radio frequency, and other factors, so that a partial sub-frame, i.e., a physical resource with a less length of time than the length of a normal sub-frame, may be transmitted. If no signal is transmitted in the partial sub-frame, then the resource will be preempted by another node in the case of drastic resource contention.

Moreover an unlicensed frequency band can be occupied constantly for a period of time specified in different regions, for example, the longest period of time for which a station transmits once in an unlicensed frequency band is 4ms as specified in Japan. Deployment of an LTE system in an unlicensed frequency band as specified in the 3GPP standard shall comply with the specifications in the respective regions. Accordingly a station transmits once in an unlicensed frequency band for the longest period of time which is 4ms, and if no data are transmitted in a partial sub-frame, then the efficiency of transmission will be seriously degraded.

Downlink Control Signaling (DCI) in the LTE system is transmitted over a downlink control channel. DCI to schedule transmission over a Physical Downlink Shared Channel (PDSCH) in a downlink sub-frame n is transmitted in the downlink sub-frame n. Two different physical downlink control channels supported in the LTE Rel-12 are a Physical Downlink Control Channel (PDCCH) and an Enhanced Physical Downlink Control Channel (EPDCCH).

Fig.3 illustrates a schematic diagram of transmission of downlink control channels in an LTE system, where a PDCCH is transmitted in first N Orthogonal Frequency Division Multiplexing (OFDM) symbols in each downlink sub-frame, and demodulated based upon a Cell-specific Reference Signal (CRS). N can be 1 or 2 for the TDD sub-frames 1 and 6. N can be 1 or 2 for a Multimedia Broadcast Multicast Service (MBMS) over a Single Frequency Network (MBSFN) with hybrid carriers. N can be 1, 2, 3 or 4 for a normal downlink sub-frame other than a TDD sub-frame and an MBSFN sub-frame, where N will be 4 only if there is a system bandwidth of 1.4MHz or less. An EPDCCH is transmitted over another resource than the PDCCH, where the EPDCCH is transmitted in at least one Physical Resource Block (PRB) pair in a sub-frame, and the EPDCCH is demodulated based upon a UE-specific reference signal (generally referred to as a Demodulation Reference Signal (DMRS)).

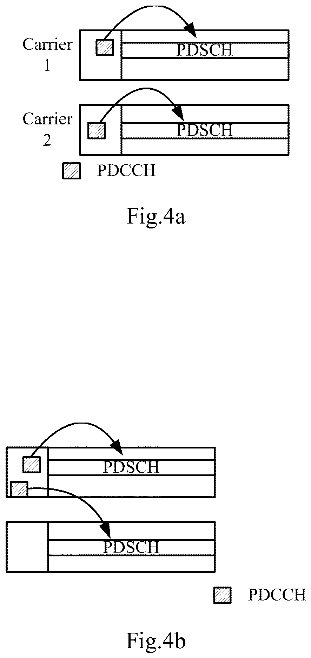

Two scheduling modes supported in the LTE Rel-12 are intra-carrier scheduling and cross-carrier scheduling. As illustrated in Fig.4a, DCI to schedule transmission of a PDSCH or a Physical Uplink Shared Channel (PUSCH) over a carrier c is transmitted over the carrier c in intra-carrier scheduling. As illustrated in Fig.4b, DCI to schedule transmission of a PDSCH/PUSCH over a carrier c is transmitted over another carrier in cross-carrier scheduling.

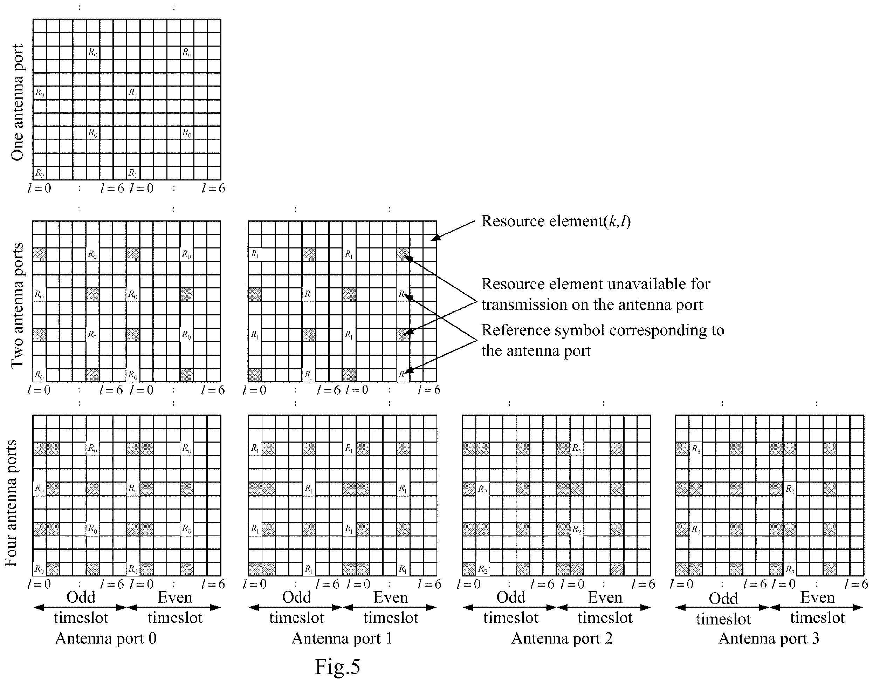

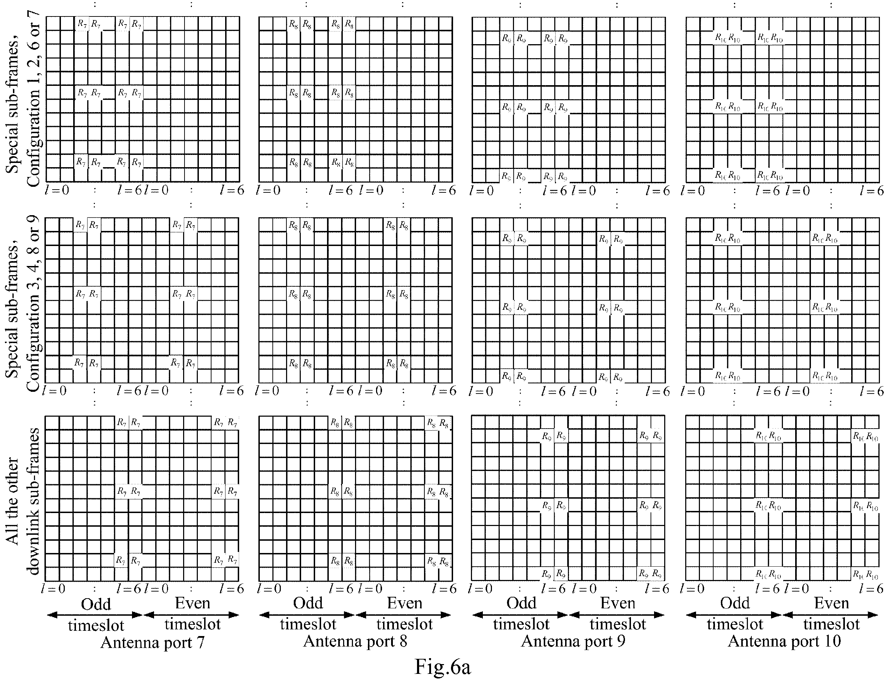

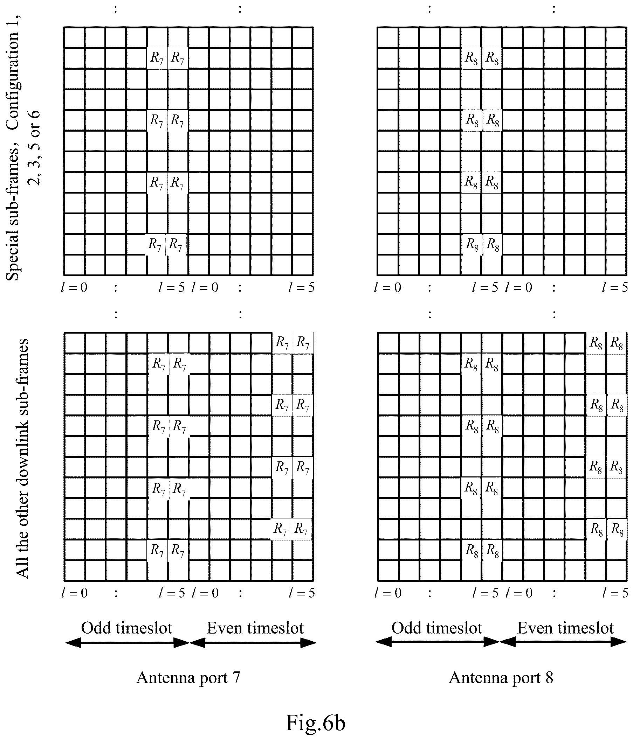

There are various reference signals in the LTE system, including a CRS and a DMRS, both of which are configured for demodulation. The CRS is mapped throughout a frequency band of downlink sub-frames, and Fig.5 illustrates schematic structural diagrams thereof in a sub-frame with a normal Cyclic Prefix (CP). The DMRS is only mapped onto a PRB pair in which a PDSCH or an EPDCCH is transmitted, and Fig.6a and Fig.6b illustrate schematic structural diagrams thereof.

Moreover there is also a Channel-State Information Reference Signal (CSI-RS) in the LTE system, which is used for measuring a channel state, and like the CRS, the CSI-RS is also mapped throughout a frequency band of downlink sub-frames, and reference can be made to Section 6.10.5 in TS36.211 for a particular structure thereof.

For an FDD carrier, the user equipment feeds back in the sub-frame n Acknowledgement (ACK)/Non-Acknowledgement (NACK) information corresponding to a PDSCH received in the sub-frame n-4. For a TDD carrier, the user equipment feeds back, in the sub-frame n, ACK/NACK information corresponding to a PDSCH received in the sub-frame n-k, where the value of k is dependent upon the TDD uplink/downlink configuration, and the position of the sub-frame n, particularly as depicted in Table 1:

**Table 1**

| Uplink/downlink configuration | Sub-frame n | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

In summary, there has been absent a particular solution to the LTE system transmitting data in an unlicensed frequency band.

### Summary

Embodiments of the application provide a method and device for transmitting data, and a method and device for transmitting feedback information so as to provide a solution to an LTE system transmitting data in an unlicensed frequency band.

Particular technical solutions according to the embodiments of the application are as follows:

In a first aspect, there is provided a method for transmitting data, the method including:
determining, by a user equipment, a start time of a system radio sub-frame according to a signal/information transmitted by a network device;
receiving, by the user equipment, downlink control information according to the start time of the system radio sub-frame n+1, wherein n is a sequence number of the system radio sub-frame;
determining, by the user equipment, a start time of a service sub-frame m in the system radio sub-frame n according to the downlink control information, wherein m is a sequence number of the service sub-frame, the start time of the service sub-frame m is different from the start time of the system radio sub-frame n, and a length of the service sub-frame is the same as a length of the system radio sub-frame; and
receiving, by the user equipment, service data in the service sub-frame m.

Preferably determining, by the user equipment, the start time of the service sub-frame m in the system radio sub-frame n includes:
the system radio sub-frame n includes N Orthogonal Frequency Division Multiplexing (OFDM) symbols, wherein N is a positive integer more than 1; and
determining, by the user equipment, a start time of an OFDM symbol in the system radio sub-frame n to be the start time of the service sub-frame m.

Preferably receiving, by the user equipment, the service data in the service sub-frame m further includes:
receiving, by the user equipment, service data in P-1 consecutive service sub-frames following the service sub-frame m, wherein P is a positive integer; and wherein
receiving, by the user equipment, downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
   or
receiving, by the user equipment, downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and receiving, by the user equipment, downlink control information according to a start time of the system radio sub-frame n+P-1, wherein the downlink control information is used for scheduling transmission of service data in the service sub-frame m+P-1;
   or
receiving, by the user equipment, downlink control information according to a start time of the system radio sub-frame n+1, wherein the downlink control information is used for scheduling transmission of service data in the service sub-frame m; and receiving, by the user equipment, downlink control information according to a start time of the service sub-frame m+p, wherein the downlink control information is used for scheduling transmission of service data in the service sub-frame m+p, and the value of p is a positive integer more than or equal to 1, and less than or equal to P-1.

Preferably a reference symbol is determined according to the start time of the system radio sub-frame.

In a second aspect, there is provided a method for transmitting data, the method including:
transmitting, by a network device, a signal/information for determining a start time of a system radio sub-frame;
determining, by the network device, a start time of a service sub-frame m in a system radio sub-frame n, wherein n is a sequence number of the system radio sub-frame, m is a sequence number of the service sub-frame, the start time of the service sub-frame m is different from the start time of the system radio sub-frame n, and a length of the service sub-frame is the same as a length of the system radio sub-frame;
transmitting, by the network device, downlink control information to a user equipment according to the start time of the system radio sub-frame n+1, wherein the downlink control information indicates the start time of the service sub-frame m; and
transmitting, by the network device, service data in the service sub-frame m.

Preferably determining, by the network device, the start time of the service sub-frame m in the system radio sub-frame n includes:
the system radio sub-frame n includes N Orthogonal Frequency Division Multiplexing (OFDM) symbols, wherein N is a positive integer more than 1; and
determining, by the network device, a start time of an OFDM symbol in the system radio sub-frame n to be the start time of the service sub-frame m.

Preferably transmitting, by the network device, the service data in the service sub-frame m further includes:
transmitting, by the network device, service data in P-1 consecutive service sub-frames following the service sub-frame m, wherein P is a positive integer; and wherein
transmitting, by the network device, downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
   or
transmitting, by the network device, downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and transmitting, by the network device, downlink control information according to a start time of the system radio sub-frame n+P-1, wherein the downlink control information is used for scheduling transmission of service data in the service sub-frame m+P-1;
   or
transmitting, by the network device, downlink control information according to a start time of the system radio sub-frame n+1, wherein the downlink control information is used for scheduling transmission of service data in the service sub-frame m is scheduled; and transmitting, by the network device, downlink control information according to a start time of the service sub-frame m+p, wherein the downlink control information is used for scheduling transmission of service data in the service sub-frame m+p, and the value of p is a positive integer more than or equal to 1, and less than or equal to P-1.

Preferably a reference signal is mapped according to the start time of the system radio sub-frame.

In a third aspect, there is provided a method for transmitting feedback information, the method including:
determining, by a user equipment, a start time of a system radio sub-frame according to a signal/information transmitted by a network device;
receiving, by a user equipment, a Physical Downlink Shared Channel (PDSCH) transmitted by the network device, wherein the PDSCH is transmitted in a number of system radio sub-frames; and
transmitting, by the user equipment, feedback response information corresponding to the PDSCH in the system radio sub-frame a, wherein as specified in the LTE Rel-12 system, feedback response information of a last one of the system radio sub-frames is transmitted in the system radio sub-frame a, wherein a is a sequence number of the system radio sub-frame.

In a fourth aspect, there is provided a method for receiving feedback information, the method including:
transmitting, by a network device, a signal/information for determining a start time of a system radio sub-frame;
transmitting, by the network device, a Physical Downlink Shared Channel (PDSCH), wherein the PDSCH is transmitted in a number of system radio sub-frames; and
receiving, by the network device, feedback response information corresponding to the PDSCH in the system radio sub-frame a, wherein as specified in the LTE Rel-12 system, feedback response information of a last one of the system radio sub-frames is transmitted in the system radio sub-frame a, wherein a is a sequence number of the system radio sub-frame.

In a fifth aspect, there is provided a user equipment including:
a first determining module configured to determine a start time of a system radio sub-frame according to a signal/information transmitted by a network device;
a first receiving module configured to receive downlink control information according to the start time of the system radio sub-frame n+1 determined by the first determining module, wherein n is a sequence number of the system radio sub-frame;
a second determining module configured to determine a start time of a service sub-frame m in the system radio sub-frame n according to the downlink control information, wherein m is a sequence number of the service sub-frame, the start time of the service sub-frame m is different from the start time of the system radio sub-frame n, and a length of the service sub-frame is the same as a length of the system radio sub-frame; and
a second receiving module configured to receive service data in the service sub-frame m.

Preferably the system radio sub-frame n includes N Orthogonal Frequency Division Multiplexing (OFDM) symbols, wherein N is a positive integer more than 1; and
the second determining module is configured:
to determine a start time of an OFDM symbol in the system radio sub-frame n to be the start time of the service sub-frame m.

Preferably the user equipment further includes a third receiving module configured:
to receive service data in P-1 consecutive service sub-frames following the service sub-frame m, wherein P is a positive integer; and wherein
to receive downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
   or
to receive downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and to receive downlink control information according to a start time of the system radio sub-frame n+P-1, wherein the downlink control information is used for scheduling transmission of service data in the service sub-frame m+P-1;
   or
to receive downlink control information according to a start time of the system radio sub-frame n+1, wherein the downlink control information is used for scheduling transmission of service data in the service sub-frame m; and to receive downlink control information according to a start time of the service sub-frame m+p, wherein the downlink control information is used for scheduling transmission of service data in the service sub-frame m+p, and the value of p is a positive integer more than or equal to 1, and less than or equal to P-1.

Preferably the first determining module is further configured:
to determine a reference symbol according to the start time of the system radio sub-frame.

In a sixth aspect, there is provided a network device including:
a first transmitting module configured to transmit a signal/information for determining a start time of a system radio sub-frame;
a determining module configured to determine a start time of a service sub-frame m in a system radio sub-frame n, wherein n is a sequence number of the system radio sub-frame, m is a sequence number of the service sub-frame, the start time of the service sub-frame m is different from the start time of the system radio sub-frame n, and a length of the service sub-frame is the same as a length of the system radio sub-frame;
a second transmitting module configured to transmit downlink control information to a user equipment according to the start time of the system radio sub-frame n+1, wherein the downlink control information indicates the start time of the service sub-frame m; and
a third transmitting module configured to transmit service data in the service sub-frame m.

Preferably the system radio sub-frame n includes N Orthogonal Frequency Division Multiplexing (OFDM) symbols, wherein N is a positive integer more than 1; and
the determining module is configured to determine a start time of an OFDM symbol in the system radio sub-frame n to be the start time of the service sub-frame m.

Preferably the network device further includes a fourth transmitting module configured:
to transmit service data in P-1 consecutive service sub-frames following the service sub-frame m, wherein P is a positive integer; and
to transmit downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
   or
to transmit downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and to transmit downlink control information according to a start time of the system radio sub-frame n+P-1, wherein the downlink control information is used for scheduling transmission of service data in the service sub-frame m+P-1;
   or
to transmit downlink control information according to a start time of the system radio sub-frame n+1, wherein the downlink control information is used for scheduling transmission of service data in the service sub-frame m; and to transmit downlink control information according to a start time of the service sub-frame m+p, wherein the downlink control information is used for scheduling transmission of service data in the service sub-frame m+p, and the value of p is a positive integer more than or equal to 1, and less than or equal to P-1.

Preferably the determining module is further configured:
to map a reference signal according to the start time of the system radio sub-frame.

In a seventh aspect, there is provided a user equipment including:
a first determining module configured to determine a start time of a system radio sub-frame according to a signal/information transmitted by a network device;
a receiving module configured to receive a Physical Downlink Shared Channel (PDSCH) transmitted by the network device, wherein the PDSCH is transmitted in a number of system radio sub-frames; and
a feeding-back module configured to transmit feedback response information corresponding to the PDSCH in the system radio sub-frame a, wherein as specified in the LTE Rel-12 system, feedback response information of a last one of the system radio sub-frames is transmitted in the system radio sub-frame a, wherein a is a sequence number of the system radio sub-frame.

In an eighth aspect, there is provided a network device including:
a first transmitting module configured to transmit a signal/information for determining a start time of a system radio sub-frame.
a second transmitting module configured to transmit a Physical Downlink Shared Channel (PDSCH), wherein the PDSCH is transmitted in a number of system radio sub-frames.
a receiving module configured to receive feedback response information corresponding to the PDSCH in the system radio sub-frame a, wherein as specified in the LTE Rel-12 system, feedback response information of a last one of the system radio sub-frames is transmitted in a system radio sub-frame a, wherein a is a sequence number of the system radio sub-frame.

With the technical solutions above, in the embodiments of the application, the solution is provided to transmission of data in a partial sub-frame in an unlicensed frequency band in an LTE system to thereby extend a covered frequency band, and avoid a waste of resources. Moreover since the length of a service sub-frame is fixed in the embodiments of the application, the network device can process in advance the data into information to be transmitted in a sub-frame, by scheduling the user equipment, modulating and encoding the data, pre-coding the data, etc., and after the network device accesses the channel, it can transmit in advance the processed information directly to thereby improve the efficiency of transmission.

### Brief Description of the Drawings

Fig.1a is a schematic diagram of an access of FBE to an channel;
Fig.1b is a schematic diagram of an access of LBE to an channel;
Fig.2a is a schematic diagram of a first frame structure;
Fig.2b is a schematic diagram of a second frame structure;
Fig.3 is a schematic diagram of transmission of downlink control channels in an LTE system;
Fig.4a is a schematic diagram of intra-carrier scheduling;
Fig.4b is a schematic diagram of cross-carrier scheduling;
Fig.5 is a schematic structural diagram of a CRS in a sub-frame with a normal CP;
Fig.6a is a schematic structural diagram of a DMRS in a sub-frame with a normal CP;
Fig.6b is a schematic structural diagram of a DMRS in a sub-frame with an extended CP;
Fig.7 is a schematic flow chart of a method for transmitting data by a user equipment according to an embodiment of the application;
Fig.8 is a schematic diagram of a service sub-frame according to an embodiment of the application;
Fig.9 is a schematic diagram of an access to a channel according to an embodiment of the application;
Fig.10 is a schematic flow chart of a method for transmitting data by a network device according to an embodiment of the application;
Fig.11 is a schematic structural diagram of transmitting DCI over a PDCCH according to an embodiment of the application;
Fig.12 is a schematic structural diagram of transmitting DCI over an EPDCCH according to an embodiment of the application;
Fig.13 is another schematic structural diagram of transmitting DCI over an EPDCCH according to an embodiment of the application;
Fig.14 is another schematic structural diagram of transmitting DCI over an EPDCCH according to an embodiment of the application;
Fig.15 is another schematic structural diagram of transmitting DCI over a PDCCH according to an embodiment of the application;
Fig.16 is another schematic structural diagram of transmitting DCI over an EPDCCH according to an embodiment of the application;
Fig.17 is a schematic flow chart of a method for transmitting feedback information by a user equipment according to an embodiment of the application;
Fig.18 is a schematic flow chart of a method for transmitting feedback information by a network device according to an embodiment of the application;
Fig.19 is a schematic structural diagram of a user equipment according to an embodiment of the application;
Fig.20 is a schematic structural diagram of another user equipment according to an embodiment of the application;
Fig.21 is a schematic structural diagram of a network device according to an embodiment of the application;
Fig.22 is another schematic structural diagram of a network device according to an embodiment of the application;
Fig.23 is another schematic structural diagram of a user equipment according to an embodiment of the application;
Fig.24 is another schematic structural diagram of a user equipment according to an embodiment of the application;
Fig.25 is another schematic structural diagram of a network device according to an embodiment of the application; and
Fig.26 is another schematic structural diagram of a network device according to an embodiment of the application.

### Detailed Description of the Embodiments

In order to make the objects, technical solutions, and advantages of the application more apparent, the application will be described below in further details with reference to the drawings, and apparently the embodiments to be described below are only a part not all of the embodiments of the application. Based upon the embodiments here of the application, all the other embodiments which can occur to those ordinarily skilled in the art without any inventive effort will fall into the scope of the application as claimed.

In the respective embodiments of the application, for example, a network device accesses a channel in a system radio sub-frame n in an unlicensed frequency band.

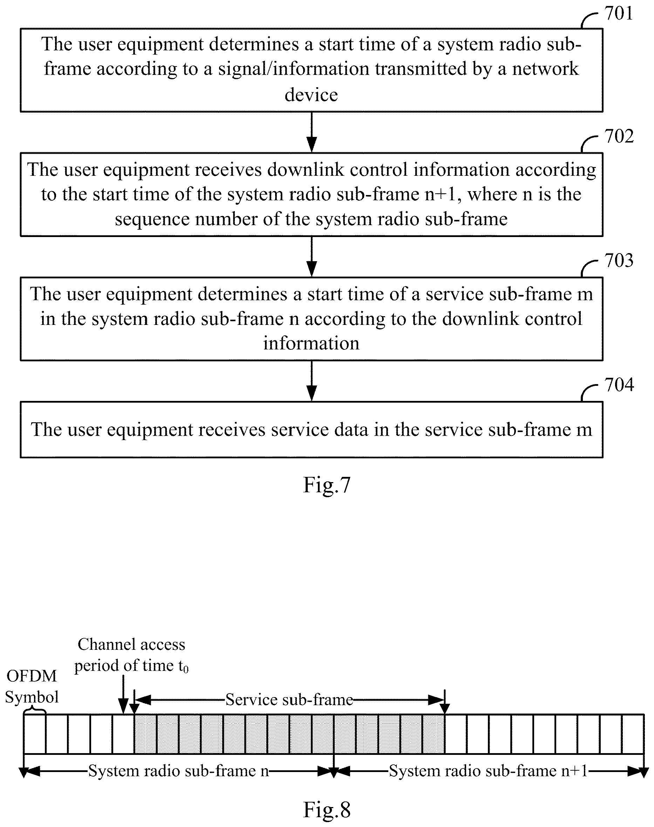

Fig.7 illustrates a detailed flow chart of a method for transmitting data in an unlicensed frequency band by a user equipment in an LTE system as follows:

In the operation 701, the user equipment determines a start time of a system radio sub-frame according to a signal/information transmitted by a network device.

Here the user equipment can determine the start time of the system radio sub-frame according to one or more of the following signal/information:
A Primary Synchronization Signal/Secondary Synchronization Signal (PSS/SSS) signal in the current unlicensed frequency band;
A PSS/SSS signal over a primary carrier;
Higher-layer information transmitted over a primary carrier; and
Downlink control information transmitted over a primary carrier.

The system radio sub-frame includes N OFDM symbols, where N is a positive integer more than 1.

N is 14 or 12 in the LTE system.

In the operation 702, the user equipment receives downlink control information according to the start time of the system radio sub-frame n+1, where n is the sequence number of the system radio sub-frame.

Here a reference symbol is determined according to the start time of the system radio sub-frame, where the reference signal is one or more of the following reference symbols: a Cell-specific Reference Symbol (CRS), a Demodulation Reference Symbol (DMRS), and a Channel State Indicator-Reference Symbol (CSI-RS).

In the operation 703, the user equipment determines a start time of a service sub-frame m in the system radio sub-frame n according to the downlink control information.

Here m is the sequence number of the service sub-frame, the start time of the service sub-frame m is different from the start time of the system radio sub-frame n, and the length of the service sub-frame is the same as the length of the system radio sub-frame.

The user equipment determines a start time of an OFDM symbol in the system radio sub-frame n to be the start time of the service sub-frame m.

In an embodiment of the application, for example, the service sub-frame m consists of the A-th to N-th OFDM symbols in the system radio sub-frame n, and the first to (A-l)-th OFDM symbols in the (n+1)-th radio sub-frame, where the value of A is a positive integer more than or equal to 2, and less than or equal to N.

The number of OFDM symbols in which the network device can transmit data after accessing the channel in the system radio sub-frame n is no less than N-A+1, that is, the network device can start to transmit data starting with the A-th OFDM symbol in the system radio sub-frame n.

As illustrated in Fig.8, the last (N-A+1) OFDM symbols in the sub-frame n, and the first (A-1) OFDM symbols in the sub-frame n+1 constitute a service sub-frame, and a Physical Downlink Shared Channel (PDSCH) is transmitted in a service sub-frame, that is, a Transport Block (TB) is transmitted in available Resource Elements (REs) in the last (N-A+1) OFDM symbols in the sub-frame n, and the first (A-1) OFDM symbols in the sub-frame n+1, where an available RE refers to an RE in which non-service information including a Physical Downlink Control Channel (PDCCH), an Enhanced Physical Downlink Control Channel (EPDCCH), a Reference Symbol (RS), a Primary/Secondary Synchronization Signal (PSS/SSS), a Physical Broadcast Channel (PBCH), etc., is not transmitted.

In a first particular embodiment, the network device determines the value of A according to the time at which the network device accesses the channel.

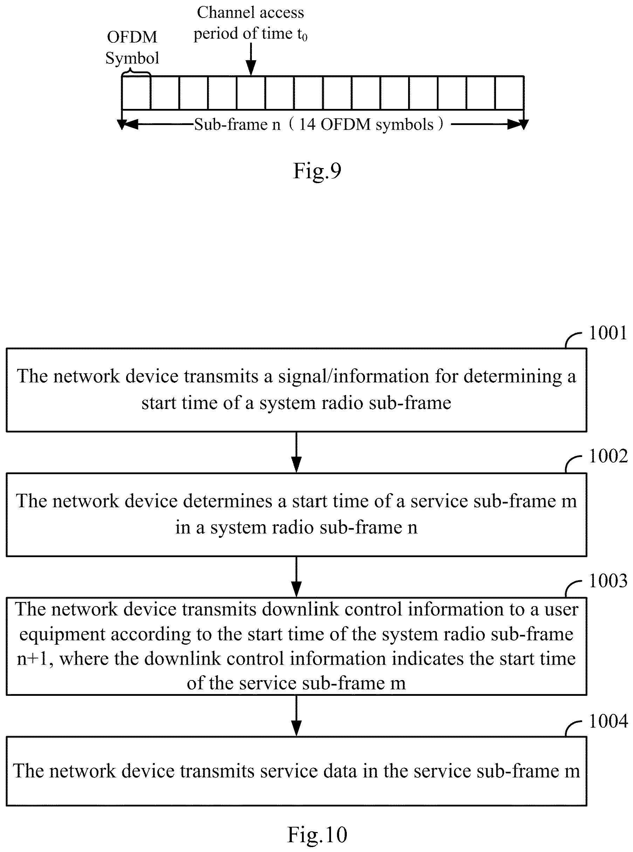

Particularly as illustrated in Fig.9, if N is 14, and the network device accesses a channel at a point of time t0, then A may be any integer between 5 and 14. If the channel is unnecessarily clear in the sub-frame n, then the resource may be wasted on one hand, and another system may access the frequency band on the other hand, so preferably A is 6.

In a second particular embodiment, B optional values are prescribed in the system or the protocol, where B is a positive integer less than or equal to N-1, so the network device selects one of the B optional values as the value of A according to the time at which the network device accesses the channel.

As illustrated in Fig.9, if N is 14, and four values of A are prescribed in the system or the protocol as 2, 5, 8, and 11 respectively. If the network device accesses the channel at a point of time t0, then A may be 8 or 11. Preferably A is 8. This method is advantageous in that the value of A is restricted so that the network device and the user equipment may be somewhat simplified in their implementations.

In the operation 704, the user equipment receives service data in the service sub-frame m.

For example, the user equipment receives service data in the service sub-frame m, and (P-1) following consecutive service sub-frames, where P is a positive integer.

Particularly the user equipment schedules transmission of the service data in the corresponding service sub-frame using the downlink control information, particular implementations can include but not limit to the following three implementations:
In a first scheduling mode, the user equipment receives downlink control information according to a start time of the system radio sub-frame n+1+p, where the downlink control information is used for transmission of service data in the service sub-frame m+p, and the value of p is an integer more than or equal to 0, and less than or equal to P-1.
In a second scheduling mode, the user equipment receives downlink control information according to a start time of the system radio sub-frame n+1+p, where the downlink control information is used for transmission of service data in the service sub-frame m+p , and the value of p is an integer more than or equal to 0, and less than or equal to P-2; and
The user equipment receives downlink control information according to a start time of the system radio sub-frame n+P-1, where the downlink control information is used for transmission of service data in the service sub-frame m+P-1.

In a third scheduling mode, the user equipment receives downlink control information according to a start time of the system radio sub-frame n+1, where the downlink control information is used for transmission of service data in the service sub-frame m.

The user equipment receives downlink control information according to a start time of the service sub-frame m+p, where the downlink control information is used for transmission of service data in the service sub-frame m+p, and the value of p is an integer more than or equal to 1, and less than or equal to P-1

In a second embodiment of the application, as illustrated in Fig. 10, a detailed flow of a method for transmitting data in an unlicensed frequency band by a network device in an LTE system is as follows:

In the operation 1001, the network device transmits a signal/information for determining a start time of a system radio sub-frame.

Here the signal/information is one or more of the following signal/information:
A Primary Synchronization Signal/Secondary Synchronization Signal (PSS/SSS) signal in the current unlicensed frequency band;
A PSS/SSS signal over a primary carrier;
Higher-layer information transmitted over a primary carrier; and
Downlink control information transmitted over a primary carrier.

In the operation 1002, the network device determines a start time of a service sub-frame m in a system radio sub-frame n.

Here n is the sequence number of the system radio sub-frame, m is the sequence number of the service sub-frame, the start time of the service sub-frame m is different from the start time of the system radio sub-frame n, and the length of the service sub-frame is the same as the length of the system radio sub-frame.

Particularly the system radio sub-frame n includes N OFDM symbols, where N is a positive integer more than 1; and

The network device determines the start time of an OFDM symbol in the system radio sub-frame to be the start time of the service sub-frame m.

In the operation 1003, the network device transmits downlink control information to a user equipment according to the start time of the system radio sub-frame n+1, where the downlink control information indicates the start time of the service sub-frame m.

In the operation 1004, the network device transmits service data in the service sub-frame m.

For example, the network device transmits service data in the service sub-frame m, and P-1 following consecutive service sub-frames, where P is a positive integer.

Particularly the network device schedules transmission of the service data in the corresponding service sub-frame using the downlink control information, particular implementations can include but not limit to the following three implementations:
In a first scheduling mode, the network device transmits downlink control information according to the start time of the system radio sub-frame n+1+p, where the downlink control information is used for transmission of service data in the service sub-frame m+p, and the value of p is an integer more than or equal to 0, and less than or equal to P-1.
In a second scheduling mode, the network device transmits downlink control information according to the start time of the system radio sub-frame n+1+p, where the downlink control information is used for transmission of service data in the service sub-frame m+p, and the value of p is an integer more than or equal to 0, and less than or equal to P-2; and
The network device transmits downlink control information according to the start time of the system radio sub-frame n+P-1, where the downlink control information is used for transmission of service data in the service sub-frame m+P-1.

In a third scheduling mode, the network device transmits downlink control information according to the start time of the system radio sub-frame n+1, where the downlink control information is used for transmission of service data in the service sub-frame m.

The network device transmits downlink control information according to the start time of the service sub-frame m+p, where the downlink control information is used for transmission of service data in the service sub-frame m+p, and the value of p is an integer more than or equal to 0, and less than or equal to P-1.

Here a reference signal is mapped according to the start time of the system radio sub-frame, where the reference symbol is one ore more of the following reference symbols: a Cell-specific Reference Signal (CRS), a Demodulation Reference Symbol (DMRS), and a Channel State Indicator-Reference Signal (CSI-RS).

In the respective embodiments, the Downlink Control Information (DCI) is transmitted particularly in the following two implementations:

### First Implementation:

The DCI can be transmitted over a PDCCH or an EPDCCH, and the PDCCH or an EPDCCH is mapped according to the start time of the system radio sub-frame.

The start time of the service sub-frame m, i.e., the value of A in the system radio sub-frame n, is indicated in a specific information field in the DCI in the system radio sub-frame n+1. If data are transmitted in the service sub-frame m, and P-1 following consecutive service sub-frames, then the DCI in the system radio sub-frame n+1+p may or may not include the specific information field, where the value of p is a positive integer more than or equal to 1, and less than or equal to P-1.

This implementation is advantageous in that the DCI can be transmitted in the existing PDCCH or EPDCCH mechanism.

### DCI transmission mode a:

It corresponds to the first scheduling mode above.

The DCI is transmitted over a PDCCH particularly as follows:

Transmission of a PDSCH in the service sub-frame m+p is scheduled using a PDCCH transmitted in the system radio sub-frame n+1+p, and preferably a PDCCH transmitted in the system radio sub-frame n+1+p as specified in the LTE Rel-12 system, where p=0, 1, ... ..., P-1, and the network device transmits constantly for P ms after preempting the channel.

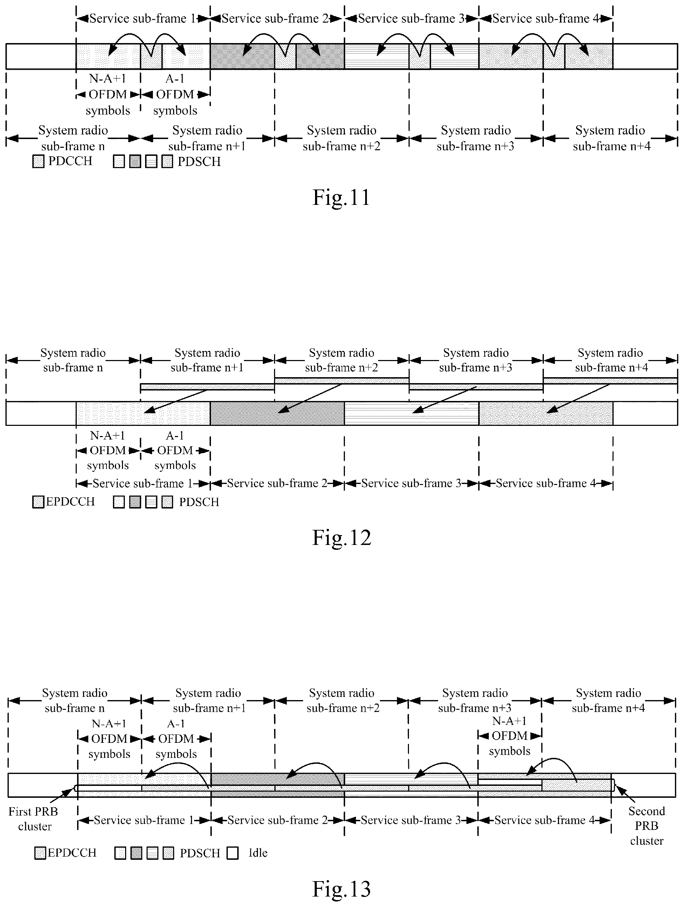

As illustrated in Fig.11, the network device transmits constantly for 4ms, for example, but the embodiment of the application will not be limited thereto. The PDCCH may be transmitted over an unlicensed carrier in which the PDSCH located, i.e., intra-carrier scheduling, or may be transmitted over another carrier, i.e., cross-carrier scheduling.

### DCI transmission mode b:

It corresponds to the first scheduling mode above.

The DCI is transmitted over an EPDCCH particularly as follows:

In cross-carrier scheduling, transmission of a PDSCH in the service sub-frame m+p is scheduled using an EPDCCH transmitted in the system radio sub-frame n+1+p, and preferably an EPDCCH transmitted in the system radio sub-frame n+1+p as specified in the LTE Rel-12 system, where p=0, 1, ... ..., P-1, and the network device transmits constantly for P ms after preempting the channel. As illustrated in Fig.12, the network device transmits constantly for 4ms, for example, but the embodiment of the application will not be limited thereto.

### DCI transmission mode c:

The DCI is transmitted over an EPDCCH particularly as follows:

In intra-carrier scheduling, transmission of a PDSCH in the service sub-frame m+p is scheduled using an EPDCCH transmitted in the system radio sub-frame n+1+p, and preferably an EPDCCH transmitted in the system radio sub-frame n+1+p as specified in the LTE Rel-12 system, where p=0, 1, ... ..., P-2, and the network device transmits constantly for P ms after preempting the channel. A first PRB cluster for transmitting an EPDCCH is configured in the sub-frame n+1 to the sub-frame n+P-1, where the first PRB cluster includes at least one PRB, and if the first PRB cluster includes a number of PRBs, then the PRBs may be consecutive or inconsecutive in frequency; and no PDSCH will be transmitted in the first PRB cluster, that is, the first PRB cluster is idle in the first N-A+1 symbols in the first service sub-frame.

Since an EPDCCH is transmitted in all the OFDM symbols in the first PRB cluster in a system radio sub-frame, but the system radio sub-frame n+P in which DCI corresponding to the last service sub-frame m+P-1 is transmitted in the last service sub-frame m+P-1 is a partial sub-frame, the existing EPDCCH mechanism can not be applied directly thereto.

DCI of the last service sub-frame m+P-1 which is transmitted consecutively is transmitted in the following two modes but not limited thereto:

### DCI transmission mode d:

It corresponds to the first scheduling mode.

Transmission of a PDSCH in the service sub-frame m+P-1 is scheduled using an EPDCCH transmitted in the system radio sub-frame n+P, and the network device transmits constantly for P ms after preempting the channel. In the system radio sub-frame n+P, extending the frequency resources, i.e., the number of PRBs, occupied by an EPDCCH according to the value of A, then a second PRB cluster including a first PRB cluster is obtained. No PDSCH will be transmitted in the second PRB cluster in the service sub-frame m+P-1, as illustrated in Fig.13.

For a normal Cyclical Prefix (CP), a DMRS in the system radio sub-frame n+P is mapped using a DMRS structure applicable to a TDD special sub-frame.

Particularly if A□ {8, 9, 10, 11}, then a DMRS structure corresponding to the special sub-frame configuration 1/2/6/7 will be applied to the system radio sub-frame n+P;
If A□ {5, 6, 7, 12, 13, 14}, then a DMRS structure corresponding to the special sub-frame configuration 3/4/8/9 will be applied to the system radio sub-frame n+P; and
If A is a positive integer more than or equal to 2, and less than or equal to 4, then none of the existing DMRS structures will support it, but a new DMRS structure will be defined so that there is at least one column of DMRS among the first A OFDM symbols.

For an extended CP, a DMRS applicable to a normal downlink sub-frame is applied to a DMRS in the sub-frame n+P, and if A is a positive integer more than or equal to 2, and less than or equal to 6, then none of the existing DMRS structures will support it, but a new DMRS structure will be defined so that there is at least one column of DMRS among the first A OFDM symbols.

### DCI transmission mode e:

It corresponds to the second scheduling mode above.

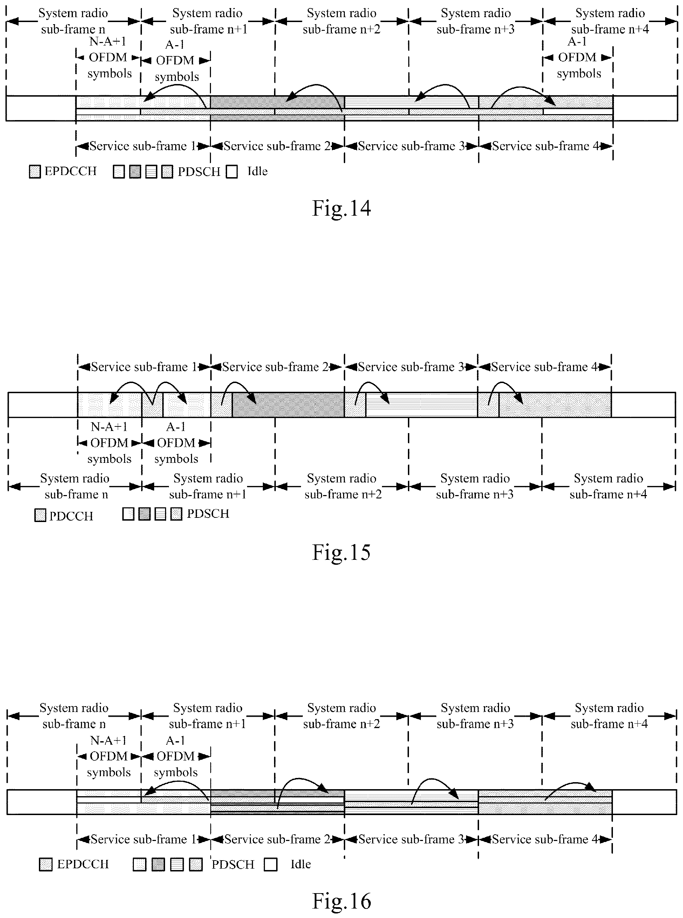

Transmission of a PDSCH in the service sub-frame m+P-1 is scheduled using an EPDCCH transmitted in the system radio sub-frame n+P-1, and the network device transmits constantly for P ms after preempting the channel, that is, PDSCHs in the service sub-frame m+P-2 and the service sub-frame m+P-1 are scheduled concurrently in the system radio sub-frame n+P-1 as illustrated in Fig.14. No PDSCH will be transmitted in the first PRB cluster in the service sub-frame m+P-1.

### Second Implementation:

DCI corresponding to the service sub-frame m is transmitted according to the start time of the system radio sub-frame n+1, and DCI corresponding to each of P-1 consecutive service sub-frames following the service sub-frame m is transmitted according to the start time of the service sub-frame.

This implementation is applicable to intra-carrier scheduling.

It corresponds to the third scheduling mode above.

DCI can be transmitted over a PDCCH or an EPDCCH.

A PDCCH/EPDCCH corresponding to the service sub-frame m is mapped according to the start time of the system radio sub-frame n+1, and a PDCCH/EPDCCH corresponding to the service sub-frame m+p is mapped according to the start time of the service sub-frame itself, where p=1, ..., P-1, and the network device transmits constantly for P ms after preempting the channel.

The start time of the service sub-frame m, i.e., the value of A, is indicated in a specific information field in the DCI in the system radio sub-frame n+1. If data are transmitted in the service sub-frame m, and P-1 following consecutive service sub-frames, then the DCI in the system service sub-frame n+1+p may or may not include the specific information field, where the value of p is a positive integer more than or equal to 1, and less than or equal to P-1.

This second implementation is advantageous in that the transmission timing relationship between DCI and a PDSCH in another service sub-frame than the service sub-frame m is the same as in the LTE Rel-12, thus lowering the complexity of scheduling.

Fig.15 illustrates a schematic diagram of transmitting DCI over a PDCCH, where there is a transmission period of time which is 4ms, for example, but the embodiment of the application will not be limited thereto. Transmission of a PDSCH in the service sub-frame m is scheduled using a PDCCH transmitted in the system radio sub-frame n+1, and preferably a PDCCH transmitted in the system radio sub-frame n+1 as specified in the LTE Rel-12 system; and transmission of a PDSCH in the service sub-frame m+p is scheduled using a PDCCH transmitted in the service sub-frame m+p, and preferably the other mechanisms will be also applicable to a PDCCH transmitted in the service sub-frame m+p as specified in the LTE Rel-12 system except that the PDCCH is mapped at a different start time, where the value of p is a positive integer more than or equal to 1, and less than or equal to P-1.

Fig.16 illustrates a schematic diagram of transmitting DCI over an EPDCCH, where there is a transmission period of time which is 4ms, for example, but the embodiment of the application will not be limited thereto. For an EPDSCH, a PRB cluster, occupied by an EPDCCH corresponding to the service sub-frame m, is denoted as T, which is different from a PRB cluster occupied by an EPDCCH corresponding to the service sub-frame m+1. In the service sub-frame m and the service sub-frame m+1, no PDSCH will be transmitted in the PRB cluster T. Transmission of a PDCCH in the service sub-frame m is scheduled using an EPDCCH transmitted in the system radio sub-frame n+1, and preferably an EPDCCH transmitted in the system radio sub-frame n+1 as specified in the LTE Rel-12 system; and transmission of a PDSCH in the service sub-frame m+p is scheduled using an EPDCCH transmitted in the service sub-frame m+p, and preferably the other mechanisms will be also applicable to a PDCCH transmitted in the service sub-frame m+p as specified in the LTE Rel-12 system except that the EPDCCH is mapped at a different start time, where the value of p is a positive integer more than or equal to 1, and less than or equal to P-1.

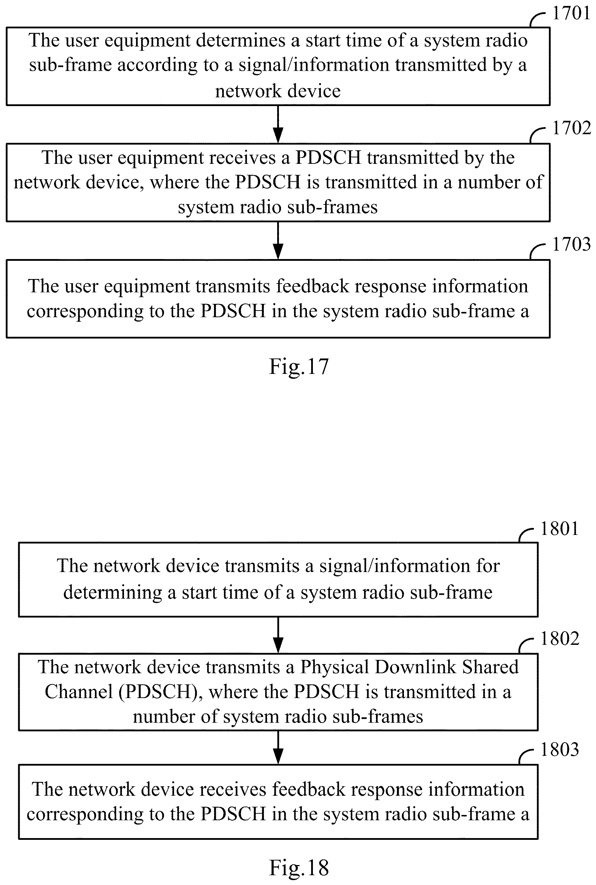

Based upon a same inventive idea, in a third embodiment of the application, as illustrated in Fig.17, a detailed flow of a method for transmitting feedback information in an unlicensed frequency band by a user equipment in an LTE system is as follows:

In the operation 1701, the user equipment determines a start time of a system radio sub-frame according to a signal/information transmitted by a network device.

In the operation 1702, the user equipment receives a Physical Downlink Shared Channel (PDSCH) transmitted by the network device, where the PDSCH is transmitted in a number of system radio sub-frames.

In the operation 1703, the user equipment transmits feedback response information corresponding to the PDSCH in the system radio sub-frame a.

Here as specified in the LTE Rel-12 system, feedback response information of the last one of the system radio sub-frames is transmitted in the system radio sub-frame a, where a is the sequence number of the system radio sub-frame.

Based upon a same inventive idea, in a fourth embodiment of the application, as illustrated in Fig.18, a detailed flow of a method for transmitting feedback information in an unlicensed frequency band by a network device in an LTE system is as follows:

In the operation 1801, the network device transmits a signal/information for determining a start time of a system radio sub-frame.

In the operation 1802, the network device transmits a Physical Downlink Shared Channel (PDSCH), where the PDSCH is transmitted in a number of system radio sub-frames.

In the operation 1803, the network device receives feedback response information corresponding to the PDSCH in the system radio sub-frame a.

Here as specified in the LTE Rel-12 system, feedback response information of the last one of the system radio sub-frames is transmitted in the system radio sub-frame a, where a is the sequence number of the system radio sub-frame.

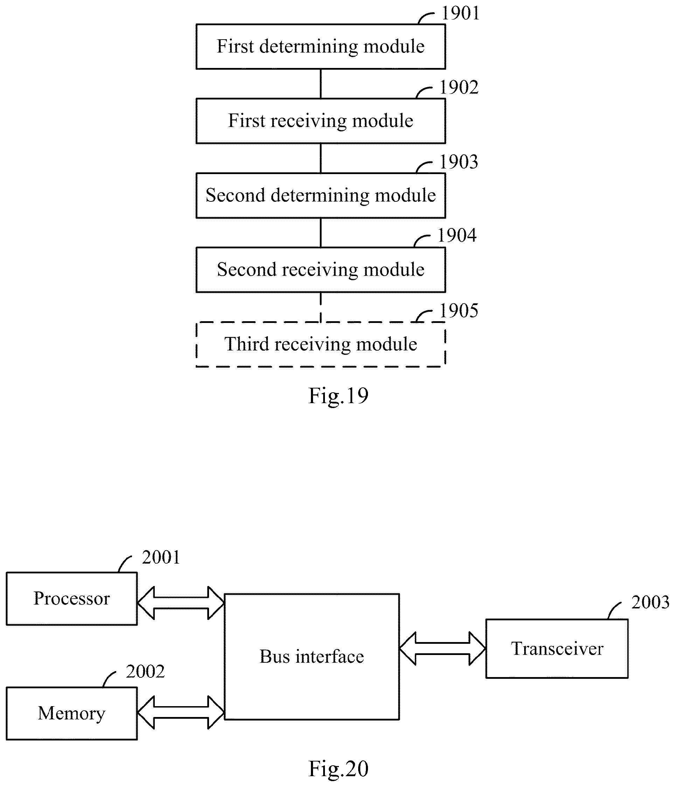

Based upon a same inventive idea, there is further provided a user equipment according to a fifth embodiment of the application, and reference can be made to the description of the UE in the embodiments above of the methods for a particular implementation of the user equipment, so a repeated description thereof will be omitted here. As illustrated in Fig.19, the user equipment generally includes:
A first determining module 1901 configured to determine a start time of a system radio sub-frame according to a signal/information transmitted by a network device;
A first receiving module 1902 configured to receive downlink control information according to the start time of the system radio sub-frame n+1 determined by the first determining module, where n is the sequence number of the system radio sub-frame;
A second determining module 1903 configured to determine a start time of a service sub-frame m in the system radio sub-frame n according to the downlink control information, where m is the sequence number of the service sub-frame, the start time of the service sub-frame m is different from the start time of the system radio sub-frame n, and the length of the service sub-frame is the same as the length of the system radio sub-frame; and
A second receiving module 1904 configured to receive service data in the service sub-frame m.

Here the system radio sub-frame n includes N Orthogonal Frequency Division Multiplexing (OFDM) symbols, where N is a positive integer more than 1.

The second determining module is configured:

To determine a start time of an OFDM symbol in the system radio sub-frame n to be the start time of the service sub-frame m.

Preferably the user equipment further includes a third receiving module 1905 configured:
To receive service data in P-1 consecutive service sub-frames following the service sub-frame m, where P is a positive integer; and
To receive downlink control information according to a start time of the system radio sub-frame n+1+p, where the downlink control information is used for scheduling transmission of service data in the service sub-frame m+p, and the value of p is an integer more than or equal to 0, and less than or equal to P-1;
   Or
To receive downlink control information according to a start time of the system radio sub-frame n+1+p, where the downlink control information is used for scheduling transmission of service data in the service sub-frame m+p, and the value of p is an integer more than or equal to 0, and less than or equal to P-2; and to receive downlink control information according to a start time of the system radio sub-frame n+P-1, where the downlink control information is used for scheduling transmission of service data in the service sub-frame m+P-1;
   Or
To receive downlink control information according to a start time of the system radio sub-frame n+1, where the downlink control information is used for scheduling transmission of service data in the service sub-frame m; and to receive downlink control information according to a start time of the service sub-frame m+p, where the downlink control information is used for scheduling transmission of service data in the service sub-frame m+p, and the value of p is a positive integer more than or equal to 1, and less than or equal to P-1.

Here the first determining module is further configured:

To determine a reference symbol according to the start time of the system radio sub-frame.

Based upon a same inventive idea, there is further provided a user equipment according to a sixth embodiment of the application, and reference can be made to the description of the UE in the embodiments above of the methods for a particular implementation of the user equipment, so a repeated description thereof will be omitted here. As illustrated in Fig.20, the user equipment generally includes a processor 2001, a memory 2002, and a transceiver 2003, where preset program is stored in the memory 2002, and the processor 2001 is configured to determine the program preset in the memory 2002 to execute the process of:
Determining a start time of a system radio sub-frame according to a signal/information transmitted by a network device;
Receiving downlink control information through the transceiver 2003 according to the determined start time of the system radio sub-frame n+1, where n is the sequence number of the system radio sub-frame;
Determining a start time of a service sub-frame m in the system radio sub-frame n according to the downlink control information, where m is the sequence number of the service sub-frame, the start time of the service sub-frame m is different from the start time of the system radio sub-frame n, and the length of the service sub-frame is the same as the length of the system radio sub-frame; and
Receiving service data through the transceiver 2003 in the service sub-frame m.

Here the system radio sub-frame n includes N Orthogonal Frequency Division Multiplexing (OFDM) symbols, where N is a positive integer more than 1.

The processor 2001 is configured to determine a start time of an OFDM symbol in the system radio sub-frame n to be the start time of the service sub-frame m.

Furthermore the processor 2001 is configured to receive service data through the transceiver 2003 in P-1 consecutive service sub-frames following the service sub-frame m, where P is a positive integer; and
To receive downlink control information according to a start time of the system radio sub-frame n+1+p, where the downlink control information is used for scheduling transmission of service data in the service sub-frame m+p, and the value of p is an integer more than or equal to 0, and less than or equal to P-1;
Or
To receive downlink control information according to a start time of the system radio sub-frame n+1+p, where the downlink control information is used for scheduling transmission of service data in the service sub-frame m+p, and the value of p is an integer more than or equal to 0, and less than or equal to P-2; and to receive downlink control information according to a start time of the system radio sub-frame n+P-1, where the downlink control information is used for scheduling transmission of service data in the service sub-frame m+P-1;
Or

To receive downlink control information according to a start time of the system radio sub-frame n+1, where the downlink control information is used for scheduling transmission of service data in the service sub-frame m; and to receive downlink control information according to a start time of the service sub-frame m+p, where the downlink control information is used for scheduling transmission of service data in the service sub-frame m+p, and the value of p is a positive integer more than or equal to 1, and less than or equal to P-1.

Here the processor 2001 is configured to determine a reference symbol according to the start time of the system radio sub-frame.

Here in Fig.20, the bus architecture can include any number of interconnecting buses and bridges to particularly link together various circuits including one or more processors represented by the processor 2001, and one or more memories represented by the memory 2002. The bus architecture can further link together various other circuits, e.g., peripheral devices, manostats, power management circuits, etc., all of which are well known in the art, so a further description thereof will be omitted in this context. The bus interface serves as an interface. The transceiver 2003 can be a number of elements including a transmitter and a receiver which are units for communication with various other devices over a transmission medium. The processor 2001 is responsible for managing the bus architecture and performing normal processes, and the memory 2002 can store data for use by the processor 2001 in performing the operations.

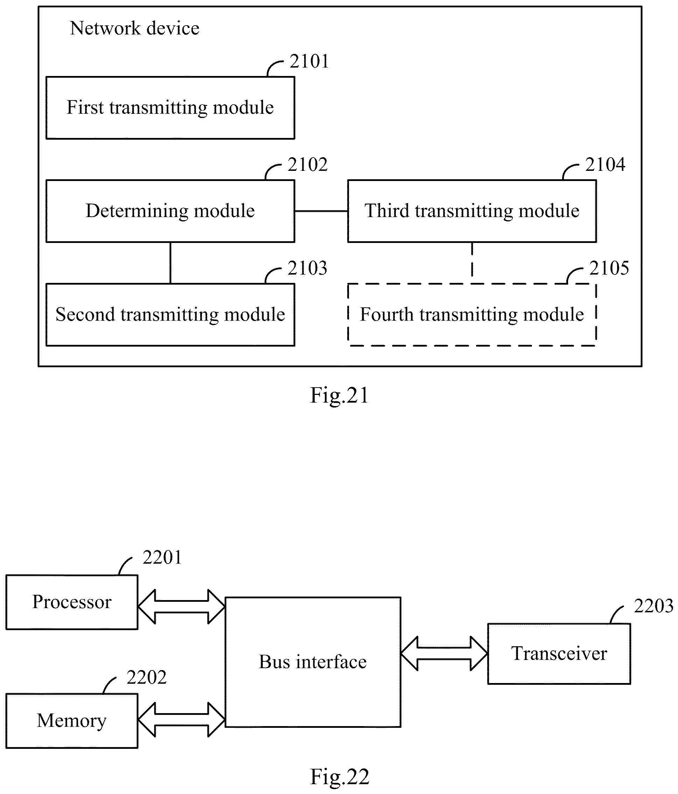

Based upon a same inventive idea, there is further provided a network device according to a seventh embodiment of the application, and reference can be made to the description of the network device in the embodiments above of the methods for a particular implementation of the network device, so a repeated description thereof will be omitted here. As illustrated in Fig.21, the network device generally includes:
A first transmitting module 2101 configured to transmit a signal/information for determining a start time of a system radio sub-frame;
A determining module 2102 configured to determine a start time of a service sub-frame m in a system radio sub-frame n, where n is the sequence number of the system radio sub-frame, m is the sequence number of the service sub-frame, the start time of the service sub-frame m is different from the start time of the system radio sub-frame n, and the length of the service sub-frame is the same as the length of the system radio sub-frame;
A second transmitting module 2103 configured to transmit downlink control information to a user equipment according to the start time of the system radio sub-frame n+1, where the downlink control information indicates the start time of the service sub-frame m; and
A third transmitting module 2104 is configured to transmit service data in the service sub-frame m.

Here the system radio sub-frame n includes N Orthogonal Frequency Division Multiplexing (OFDM) symbols, where N is a positive integer more than 1; and
The determining module is configured to determine a start time of an OFDM symbol in the system radio sub-frame n to be the start time of the service sub-frame m.

Preferably the network device further includes a fourth transmitting module 2105 configured:
To transmit service data in P-1 consecutive service sub-frames following the service sub-frame m, where P is a positive integer; and
To transmit downlink control information according to a start time of the system radio sub-frame n+1+p, where the downlink control information is used for scheduling transmission of service data in the service sub-frame m+p, and the value of p is an integer more than or equal to 0, and less than or equal to P-1;
   Or
To transmit downlink control information according to a start time of the system radio sub-frame n+1+p, where the downlink control information is used for scheduling transmission of service data in the service sub-frame m+p, and the value of p is an integer more than or equal to 0, and less than or equal to P-2; and to transmit downlink control information according to a start time of the system radio sub-frame n+P-1, where the downlink control information is used for scheduling transmission of service data in the service sub-frame m+P-1;
   Or
To transmit downlink control information according to a start time of the system radio sub-frame n+1, where the downlink control information is used for scheduling transmission of service data in the service sub-frame m; and to transmit downlink control information according to a start time of the service sub-frame m+p, where the downlink control information is used for scheduling transmission of service data in the service sub-frame m+p, and the value of p is a positive integer more than or equal to 1, and less than or equal to P-1.

Here the determining module is further configured:

To map a reference signal according to the start time of the system radio sub-frame.

Based upon a same inventive idea, there is further provided a network device according to an eighth embodiment of the application, and reference can be made to the description of the network device in the embodiments above of the methods for a particular implementation of the network device, so a repeated description thereof will be omitted here. As illustrated in Fig.22, the network device generally includes a processor 2201, a memory 2202, and a transceiver 2203, where preset program is stored in the memory 2202, and the processor 2201 is configured to determine the program preset in the memory 2202 to execute the process of:
Transmitting a signal/information for determining a start time of a system radio sub-frame, through the transceiver 2203;
Determining a start time of a service sub-frame m in a system radio sub-frame n, where n is the sequence number of the system radio sub-frame, m is the sequence number of the service sub-frame, the start time of the service sub-frame m is different from the start time of the system radio sub-frame n, and the length of the service sub-frame is the same as the length of the system radio sub-frame;
Transmitting downlink control information to a user equipment through the transceiver 2203 according to the start time of the system radio sub-frame n+1, where the downlink control information indicates the start time of the service sub-frame m; and
Transmitting service data through the transceiver 2203 in the service sub-frame m.

Here the system radio sub-frame n includes N Orthogonal Frequency Division Multiplexing (OFDM) symbols, where N is a positive integer more than 1; and
The processor 2201 is configured to determine a start time of an OFDM symbol in the system radio sub-frame n to be the start time of the service sub-frame m.

Particularly, the processor 2201 is configured to transmit service data through the transceiver 2203 in P-1 consecutive service sub-frames following the service sub-frame m, where P is a positive integer; and
To transmit downlink control information according to a start time of the system radio sub-frame n+1+p, where the downlink control information is used for scheduling transmission of service data in the service sub-frame m+p, and the value of p is an integer more than or equal to 0, and less than or equal to P-1;
Or
To transmit downlink control information according to a start time of the system radio sub-frame n+1+p, where the downlink control information is used for scheduling transmission of service data in the service sub-frame m+p, and the value of p is an integer more than or equal to 0, and less than or equal to P-2; and to transmit downlink control information according to a start time of the system radio sub-frame n+P-1, where the downlink control information is used for scheduling transmission of service data in the service sub-frame m+P-1;
Or
To transmit downlink control information according to a start time of the system radio sub-frame n+1, where the downlink control information is used for scheduling transmission of service data in the service sub-frame m; and to transmit downlink control information according to a start time of the service sub-frame m+p, where the downlink control information is used for scheduling transmission of service data in the service sub-frame m+p, and the value of p is a positive integer more than or equal to 1, and less than or equal to P-1.

Here the processor 2201 is configured to map a reference symbol according to the start time of the system radio sub-frame.

Here in Fig.22, the bus architecture can include any number of interconnecting buses and bridges to particularly link together various circuits including one or more processors represented by the processor 2201, and one or more memories represented by the memory 2202. The bus architecture can further link together various other circuits, e.g., peripheral devices, manostats, power management circuits, etc., all of which are well known in the art, so a further description thereof will be omitted in this context. The bus interface serves as an interface. The transceiver 2203 can be a number of elements including a transmitter and a receiver which are units for communication with various other devices over a transmission medium. The processor 2201 is responsible for managing the bus architecture and performing normal processes, and the memory 2202 can store data for use by the processor 2201 in performing the operations.

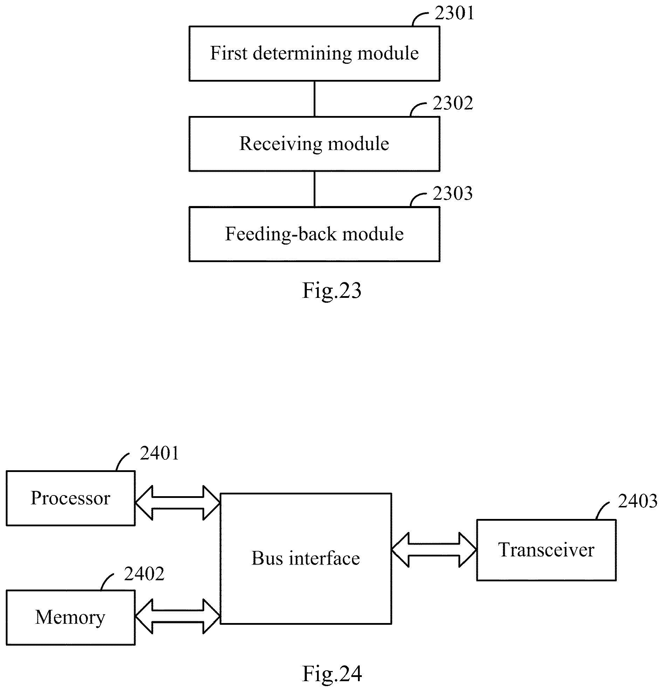

Based upon a same inventive idea, there is further provided a user equipment according to a ninth embodiment of the application, and reference can be made to the description of the UE in the third embodiment above for a particular implementation of the user equipment, so a repeated description thereof will be omitted here. As illustrated in Fig.23, the user equipment generally includes:
A first determining module 2301 configured to determine a start time of a system radio sub-frame according to a signal/information transmitted by a network device;
A receiving module 2302 configured to receive a Physical Downlink Shared Channel (PDSCH) transmitted by the network device, where the PDSCH is transmitted in a number of system radio sub-frames; and
A feeding-back module 2303 configured to transmit feedback response information corresponding to the PDSCH in the system radio sub-frame a, where as specified in the LTE Rel-12 system, feedback response information of the last one of the system radio sub-frames is transmitted in the system radio sub-frame a, where a is the sequence number of the system radio sub-frame.

Based upon a same inventive idea, there is further provided a user equipment according to a tenth embodiment of the application, and reference can be made to the description of the UE in the third embodiment above for a particular implementation of the user equipment, so a repeated description thereof will be omitted here. As illustrated in Fig.24, the user equipment generally includes a processor 2401, a memory 2402, and a transceiver 2403, where preset program is stored in the memory 2402, and the processor 2401 is configured to determine the program preset in the memory 2402 to execute the process of:
Determining a start time of a system radio sub-frame according to a signal/information transmitted by a network device;
Receiving a Physical Downlink Shared Channel (PDSCH) transmitted by the network device, where the PDSCH is transmitted in a number of system radio sub-frames; and
Transmitting feedback response information corresponding to the PDSCH through the transceiver 2403 in the system radio sub-frame a, where as specified in the LTE Rel-12 system, feedback response information of the last one of the system radio sub-frames is transmitted in the system radio sub-frame a, where a is the sequence number of the system radio sub-frame.

Here in Fig.24, the bus architecture can include any number of interconnecting buses and bridges to particularly link together various circuits including one or more processors represented by the processor 2401, and one or more memories represented by the memory 2402. The bus architecture can further link together various other circuits, e.g., peripheral devices, manostats, power management circuits, etc., all of which are well known in the art, so a further description thereof will be omitted in this context. The bus interface serves as an interface. The transceiver 2403 can be a number of elements including a transmitter and a receiver which are units for communication with various other devices over a transmission medium. The processor 2401 is responsible for managing the bus architecture and performing normal processes, and the memory 2402 can store data for use by the processor 2401 in performing the operations.

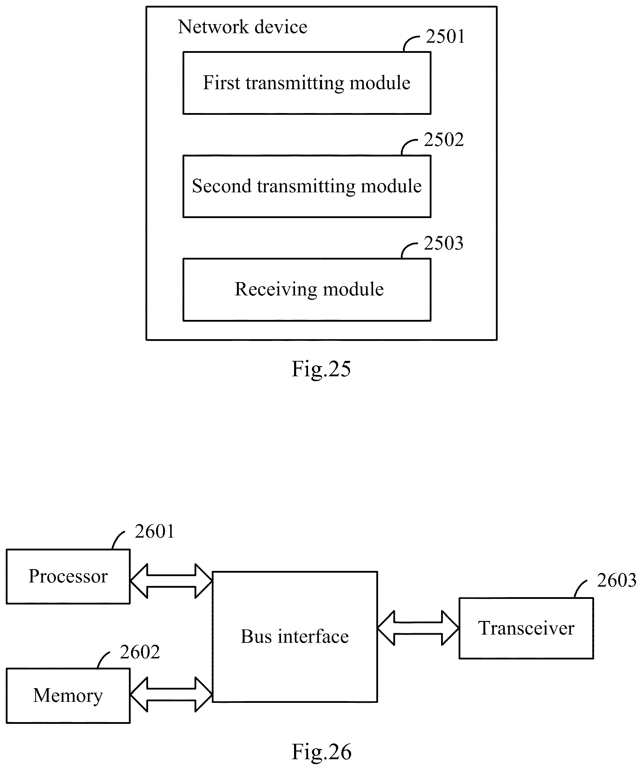

Based upon a same inventive idea, there is further provided a network device according to an eleventh embodiment of the application, and reference can be made to the description of the network device in the fourth embodiment above for a particular implementation of the network device, so a repeated description thereof will be omitted here. As illustrated in Fig.25, the network device generally includes:
A first transmitting module 2501 configured to transmit a signal/information for determining a start time of a system radio sub-frame;
A second transmitting module 2502 configured to transmit a Physical Downlink Shared Channel (PDSCH), where the PDSCH is transmitted in a number of system radio sub-frames; and
A receiving module 2503 configured to receive feedback response information corresponding to the PDSCH in the system radio sub-frame a, where as specified in the LTE Rel-12 system, feedback response information of the last one of the system radio sub-frames is transmitted in the system radio sub-frame a, where a is the sequence number of the system radio sub-frame.

Based upon a same inventive idea, there is further provided a network device according to a twelfth embodiment of the application, and reference can be made to the description of the network device in the fourth embodiment above for a particular implementation of the network device, so a repeated description thereof will be omitted here. As illustrated in Fig.26, the network device generally includes a processor 2601, a memory 2602, and a transceiver 2603, where preset program is stored in the memory 2602, and the processor 2601 is configured to determine the program preset in the memory 2602 to execute the process of:
Transmitting a signal/information for determining a start time of a system radio sub-frame, through the transceiver 2603;
Transmitting a Physical Downlink Shared Channel (PDSCH) through the transceiver 2603, where the PDSCH is transmitted in a number of system radio sub-frames.

Receiving feedback response information corresponding to the PDSCH through the transceiver 2603 in the system radio sub-frame a, where as specified in the LTE Rel-12 system, feedback response information of the last one of the system radio sub-frames is transmitted in the system radio sub-frame a, where a is the sequence number of the system radio sub-frame.

Here in Fig.26, the bus architecture can include any number of interconnecting buses and bridges to particularly link together various circuits including one or more processors represented by the processor 2601, and one or more memories represented by the memory 2602. The bus architecture can further link together various other circuits, e.g., peripheral devices, manostats, power management circuits, etc., all of which are well known in the art, so a further description thereof will be omitted in this context. The bus interface serves as an interface. The transceiver 2603 can be a number of elements including a transmitter and a receiver which are units for communication with various other devices over a transmission medium. The processor 2601 is responsible for managing the bus architecture and performing normal processes, and the memory 2602 can store data for use by the processor 2601 in performing the operations.

With the technical solutions above, in the embodiments of the application, the solution is provided to transmission of data in a partial sub-frame in an unlicensed frequency band in an LTE system to thereby extend a covered frequency band, and avoid a waste of resources.

Moreover since the length of a service sub-frame is fixed in the embodiments of the application, the network device can process in advance the data into information to be transmitted in a sub-frame, by scheduling the user equipment, modulating and encoding the data, pre-coding the data, etc., and after the network device accesses the channel, it can transmit in advance the processed information directly to thereby improve the efficiency of transmission.

Those skilled in the art shall appreciate that the embodiments of the application can be embodied as a method, a system or a computer program product. Therefore the application can be embodied in the form of an all-hardware embodiment, an all-software embodiment or an embodiment of software and hardware in combination. Furthermore the application can be embodied in the form of a computer program product embodied in one or more computer useable storage mediums (including but not limited to a disk memory, a CD-ROM, an optical memory, etc.) in which computer useable program codes are contained.

The application has been described in a flow chart and/or a block diagram of the method, the device (system) and the computer program product according to the embodiments of the application. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the application without departing from the spirit and scope of the application. Thus the application is also intended to encompass these modifications and variations thereto so long as the modifications and variations come into the scope of the claims appended to the application and their equivalents.

## Claims

1. A method for transmitting data, the method comprising:
determining, by a user equipment, a start time of a system radio sub-frame according to a signal/information transmitted by a network device;
receiving, by the user equipment, downlink control information according to the start time of the system radio sub-frame n+1, wherein n is a sequence number of the system radio sub-frame;
determining, by the user equipment, a start time of a service sub-frame m in the system radio sub-frame n according to the downlink control information, wherein m is a sequence number of the service sub-frame, the start time of the service sub-frame m is different from the start time of the system radio sub-frame n, and a length of the service sub-frame is the same as a length of the system radio sub-frame; and
receiving, by the user equipment, service data in the service sub-frame m.

2. The method according to claim 1, wherein determining, by the user equipment, the start time of the service sub-frame m in the system radio sub-frame n comprises:
the system radio sub-frame n comprises N Orthogonal Frequency Division Multiplexing, OFDM, symbols, wherein N is a positive integer more than 1; and
determining, by the user equipment, a start time of an OFDM symbol in the system radio sub-frame n to be the start time of the service sub-frame m.

3. The method according to claim 1, wherein receiving, by the user equipment, the service data in the service sub-frame m further comprises:
receiving, by the user equipment, service data in P-1 consecutive service sub-frames following the service sub-frame m, wherein P is a positive integer; and wherein
receiving, by the user equipment, downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
or
receiving, by the user equipment, downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and receiving, by the user equipment, downlink control information according to a start time of the system radio sub-frame n+P-1, wherein the downlink control information is used for scheduling transmission of service data in the service sub-frame m+P-1;
or
receiving, by the user equipment, downlink control information according to a start time of the system radio sub-frame n+1, wherein the downlink control information is used for scheduling transmission of service data in the service sub-frame m; and receiving, by the user equipment, downlink control information according to a start time of the service sub-frame m+p, wherein the downlink control information is used for scheduling transmission of service data in the service sub-frame m+p, and the value of p is a positive integer more than or equal to 1, and less than or equal to P-1.

4. The method according to claim 1, wherein a reference symbol is determined according to the start time of the system radio sub-frame.

5. A method for transmitting data, the method comprising:
transmitting, by a network device, a signal/information for determining a start time of a system radio sub-frame;
determining, by the network device, a start time of a service sub-frame m in a system radio sub-frame n, wherein n is a sequence number of the system radio sub-frame, m is a sequence number of the service sub-frame, the start time of the service sub-frame m is different from the start time of the system radio sub-frame n, and a length of the service sub-frame is the same as a length of the system radio sub-frame;
transmitting, by the network device, downlink control information to a user equipment according to the start time of the system radio sub-frame n+1, wherein the downlink control information indicates the start time of the service sub-frame m; and
transmitting, by the network device, service data in the service sub-frame m.

6. The method according to claim 5, wherein determining, by the network device, the start time of the service sub-frame m in the system radio sub-frame n comprises:
the system radio sub-frame n comprises N Orthogonal Frequency Division Multiplexing, OFDM, symbols, wherein N is a positive integer more than 1; and
determining, by the network device, a start time of an OFDM symbol in the system radio sub-frame n to be the start time of the service sub-frame m.

7. The method according to claim 5, wherein transmitting, by the network device, the service data in the service sub-frame m further comprises:
transmitting, by the network device, service data in P-1 consecutive service sub-frames following the service sub-frame m, wherein P is a positive integer; and wherein
transmitting, by the network device, downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
or
transmitting, by the network device, downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and transmitting, by the network device, downlink control information according to a start time of the system radio sub-frame n+P-1, wherein the downlink control information is used for scheduling transmission of service data in the service sub-frame m+P-1;
or
transmitting, by the network device, downlink control information according to a start time of the system radio sub-frame n+1, wherein the downlink control information is used for scheduling transmission of service data in the service sub-frame m; and transmitting, by the network device, downlink control information according to a start time of the service sub-frame m+p, wherein the downlink control information is used for scheduling transmission of service data in the service sub-frame m+p, and the value of p is a positive integer more than or equal to 1, and less than or equal to P-1.

8. The method according to claim 5, wherein a reference signal is mapped according to the start time of the system radio sub-frame.

9. A method for transmitting feedback information, the method comprising:
determining, by a user equipment, a start time of a system radio sub-frame according to a signal/information transmitted by a network device;
receiving, by a user equipment, a Physical Downlink Shared Channel, PDSCH, transmitted by the network device, wherein the PDSCH is transmitted in a number of system radio sub-frames; and
transmitting, by the user equipment, feedback response information corresponding to the PDSCH in the system radio sub-frame a, wherein as specified in the LTE Rel-12 system, feedback response information of a last one of the system radio sub-frames is transmitted in the system radio sub-frame a, wherein a is a sequence number of the system radio sub-frame.

10. A method for receiving feedback information, the method comprising:
transmitting, by a network device, a signal/information for determining a start time of a system radio sub-frame;
transmitting, by the network device, a Physical Downlink Shared Channel, PDSCH, wherein the PDSCH is transmitted in a number of system radio sub-frames; and
receiving, by the network device, feedback response information corresponding to the PDSCH in the system radio sub-frame a, wherein as specified in the LTE Rel-12 system, feedback response information of a last one of the system radio sub-frames is transmitted in the system radio sub-frame a, wherein a is a sequence number of the system radio sub-frame.

11. A user equipment, comprising:
a first determining module configured to determine a start time of a system radio sub-frame according to a signal/information transmitted by a network device;
a first receiving module configured to receive downlink control information according to the start time of the system radio sub-frame n+1 determined by the first determining module, wherein n is the sequence number of the system radio sub-frame;
a second determining module configured to determine a start time of a service sub-frame m in the system radio sub-frame n according to the downlink control information, wherein m is a sequence number of the service sub-frame, the start time of the service sub-frame m is different from the start time of the system radio sub-frame n, and a length of the service sub-frame is the same as a length of the system radio sub-frame; and
a second receiving module configured to receive service data in the service sub-frame m.

12. The user equipment according to claim 11, wherein the system radio sub-frame n comprises N Orthogonal Frequency Division Multiplexing, OFDM, symbols, wherein N is a positive integer more than 1; and
the second determining module is configured:
to determine a start time of an OFDM symbol in the system radio sub-frame to be the start time of the service sub-frame m.

13. The user equipment according to claim 11, wherein the user equipment further comprises a third receiving module configured:
to receive service data in P-1 consecutive service sub-frames following the service sub-frame m, wherein P is a positive integer; and
to receive downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
or
to receive downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and to receive downlink control information according to a start time of the system radio sub-frame n+P-1, wherein the downlink control information is used for scheduling transmission of service data in the service sub-frame m+P-1;
or
to receive downlink control information according to a start time of the system radio sub-frame n+1, wherein the downlink control information is used for scheduling transmission of service data in the service sub-frame m; and to receive downlink control information according to a start time of the service sub-frame m+p, wherein the downlink control information is used for scheduling transmission of service data in the service sub-frame m+p, and the value of p is a positive integer more than or equal to 1, and less than or equal to P-1.

14. The user equipment according to claim 11, wherein the first determining module is further configured:
to determine a reference symbol according to the start time of the system radio sub-frame.

15. A network device, comprising:
a first transmitting module configured to transmit a signal/information for determining a start time of a system radio sub-frame;
a determining module configured to determine a start time of a service sub-frame m in a system radio sub-frame n, wherein n is a sequence number of the system radio sub-frame, m is a sequence number of the service sub-frame, the start time of the service sub-frame m is different from the start time of the system radio sub-frame n, and a length of the service sub-frame is the same as a length of the system radio sub-frame;
a second transmitting module configured to transmit downlink control information to a user equipment according to the start time of the system radio sub-frame n+1, wherein the downlink control information indicates the start time of the service sub-frame m; and
a third transmitting module configured to transmit service data in the service sub-frame m.

16. The network device according to claim 15, wherein the system radio sub-frame n comprises N Orthogonal Frequency Division Multiplexing, OFDM, symbols, wherein N is a positive integer more than 1; and
the determining module is configured to determine a start time of an OFDM symbol in the system radio sub-frame n to be the start time of the service sub-frame m.

17. The network device according to claim 15, wherein the network device further comprises a fourth transmitting module configured:
to transmit service data in P-1 consecutive service sub-frames following the service sub-frame m, wherein P is a positive integer; and
to transmit downlink control information according to a start time of the system radio sub-frame n+1+p, wherein the downlink control information is used for scheduling transmission of service data in the service sub-frame m+p, and the value of p is an integer more than or equal to 0, and less than or equal to P-1;
or
to transmit downlink control information according to a start time of the system radio sub-frame n+1+p, wherein the downlink control information is used for scheduling transmission of service data in the service sub-frame m+p, and the value of p is an integer more than or equal to 0, and less than or equal to P-2; and to transmit downlink control information according to a start time of the system radio sub-frame n+P-1, wherein the downlink control information is used for scheduling transmission of service data in the service sub-frame m+P-1;
or
to transmit downlink control information according to a start time of the system radio sub-frame n+1, wherein the downlink control information is used for scheduling transmission of service data in the service sub-frame m; and to transmit downlink control information according to a start time of the service sub-frame m+p, wherein the downlink control information is used for scheduling transmission of service data in the service sub-frame m+p, and the value of p is a positive integer more than or equal to 1, and less than or equal to P-1.

18. The network device according to claim 15, wherein the determining module is further configured:
to map a reference signal according to the start time of the system radio sub-frame.

19. A user equipment, comprising:
a first determining module configured to determine a start time of a system radio sub-frame according to a signal/information transmitted by a network device;
a receiving module configured to receive a Physical Downlink Shared Channel, PDSCH, transmitted by the network device, wherein the PDSCH is transmitted in a number of system radio sub-frames; and
a feeding-back module configured to transmit feedback response information corresponding to the PDSCH in the system radio sub-frame a, wherein as specified in the LTE Rel-12 system, feedback response information of a last one of the system radio sub-frames is transmitted in the system radio sub-frame a, wherein a is a sequence number of the system radio sub-frame.

20. A network device, comprising:
a first transmitting module configured to transmit a signal/information for determining a start time of a system radio sub-frame.
a second transmitting module configured to transmit a Physical Downlink Shared Channel, PDSCH, wherein the PDSCH is transmitted in a number of system radio sub-frames.
a receiving module configured to receive feedback response information corresponding to the PDSCH in the system radio sub-frame a, wherein as specified in the LTE Rel-12 system, feedback response information of a last one of the system radio sub-frames is transmitted in a system radio sub-frame a, wherein a is a sequence number of the system radio sub-frame.
